# EUROPEAN PATENT APPLICATION

(11) **EP 2 528 130 A1**
(43) Date of publication of application: **28.11.2012**
(21) Application number: 11167943.7
(22) Date of filing: 27.05.2011
(51) Int. Cl.: H01M 2/02, H01M 2/10, H01M 10/04, B05D 5/00

(54) **Battery and battery manufacturing method**

(71) Applicant: Koninklijke Philips Electronics N.V., 5621 BA Eindhoven (NL)
(72) Inventor: Coebergh van den Braak, Paulus Antonius Bonifatius Maria, 5600 AE Eindhoven (NL); Willard, Nicolaas Petrus, 5600 AE Eindhoven (NL)
(74) Representative: Damen, Daniel Martijn

(57) **Abstract**

A battery (1) is disclosed having an outer surface (2, 3, 4) carrying a biocompatible coating (5) comprising a gustative or olfactory deterrent. A method of manufacturing such a battery (1) is also disclosed.

## Description

### FIELD OF THE INVENTION

The present invention relates to a battery and in particular a button cell battery.

The present invention further relates to manufacturing such a battery.

### BACKGROUND OF THE INVENTION

The decreasing form factor of many portable electronic devices such as wrist watches, media players, remote controls, digital cameras, hearing aids, pocket calculators and so on requires an accompanied miniaturization of the power sources, i.e. batteries required to power such devices. A prolific example of a widely used battery for such applications is the button cell battery although small batteries having different shapes are also known.

A particular concern associated with such small batteries such as the button cell battery is that they can be accidentally swallowed, which can cause major health concerns as the battery may get trapped in the body, e.g. lodged in the esophagus, which can cause severe bums in as little as two hours, thus requiring emergency medical procedures such as endoscopy or surgery to remove the trapped battery before such damage occurs to the body. Such bums typically result from the corrosion of the battery by bodily fluids and the subsequent release of harmful chemicals from the battery. In addition, such bums can also occur when a trapped battery generates an electrical current through the adjacent issue, thus triggering the generation of corrosive compounds, e.g. kali (potassium), which can cause bums and/or tissue perforations to form in as little as two hours.

In the USA alone, around 2,000 button cell batteries are annually swallowed by accident, mainly by children in the age group of 0-5 years. The associated health concerns have triggered the US senate to issue legislation (Act S.3896) to protect children form hazards associated with swallowing small batteries, most notably button cell batteries. A final consumer product safety standard will be required as mandated by section 7(a) of the Consumer Product Safety Act 15 U.S.C. 2056 (A). It is expected that similar legislation will appear in other jurisdictions, e.g. Europe.

Hence, there exists a need to reduce the risk of such accidental swallowing of small batteries by individuals such as children.

### SUMMARY OF THE INVENTION

The present invention seeks to provide a battery that dissuades an individual from swallowing a battery or from putting a battery in the mouth.

The present invention further seeks to provide a method of manufacturing such a battery.

In accordance with an aspect of the present invention, there is provided a battery having an outer surface carrying a biocompatible coating comprising a gustative or olfactory deterrent. The gustative or olfactory deterrent will reduce the risk that the individual, e.g. the child will ingest the battery as the smell or taste will discourage the child from either putting the battery in its mouth or at least from swallowing it as the gustative deterrent will encourage the individual to spit out or otherwise remove the battery from the mouth.

In an embodiment, the gustative or olfactory deterrent is released from said coating upon contact with moisture such as sweat or saliva. This will ensure that the individual will be immediately deterred as soon as the battery is picked up or inserted into the mouth, and ensures that the deterrent is not prematurely released, i.e. is still present when e.g. a child attempts to eat the battery.

The biocompatible coating may comprise a conductive polymer matrix enclosing the gustative or olfactory deterrent to ensure that the coating does not negatively affect battery performance, i.e. does not significantly increase contact resistance. Alternatively, the coating may be kept thin enough such that it will not negatively affect the battery performance. The conductive polymer matrix preferably comprises a polymer selected from the group consisting of polypyrroles, polyoxometalates and polythiophenes as such polymers are known to be biocompatible, i.e. have low toxicity.

The conductive polymer matrix may be covered by a further biocompatible water-soluble conductive layer, which has the advantage of further preventing premature release of the deterrent from the matrix, as well as limiting the release of the deterrent from the battery during normal handling, thus limiting the handler to the unpleasant stimuli caused by the deterrent or avoiding the need for the handler to wear gloves when handling the battery.

Alternatively, the biocompatible coating may be a water-soluble coating or may be oil-based. The latter has the advantage that it also acts as a corrosion protection layer to the battery.

The gustative deterrent may be a composition comprising a compound selected from the group comprising quinine, benzoic benzyl amine amide, a denatonium-based compound such as denatonium benzoate and denatonium saccharide salts, sucrose octa-acetate, capsaicin, piperine and a pelargonic acid derivate such as pelargonic acid morpholide although any biocompatible gustative deterrent may be used.

The olfactory deterrent may be a composition comprising a compound selected from the group comprising isovaleric acid, butyric acid, civet oil and derivatives thereof although any biocompatible olfactory deterrent may be used.

In accordance with another aspect of the present invention, there is provided a method of manufacturing a battery, comprising providing said battery; and providing an outer surface of said battery with a biocompatible coating comprising a gustative or olfactory deterrent. In other words, any suitable battery manufacturing process may simply be extended with a coating step in which the outer surface of the battery is coated with the olfactory or gustative deterrent to make the battery less appealing for swallowing, in particular by children.

Such a coating may for instance be realized on the battery surface by applying said coating by ink-jet printing. Alternatively, the coating is a liquid, and the step of providing said coating comprises immersing the battery in said liquid. Such immersion can only be used for electrically insulating coatings as otherwise the terminals of the battery may be short-circuited by the coating. For this reason, a non-conductive oil is preferred as liquid. In a further alternative, the step of providing said coating comprises forming a conductive polymer matrix on said outer surface and embedding the gustative or olfactory deterrent in said coating.

### BRIEF DESCRIPTION OF THE EMBODIMENTS

Embodiments of the invention are described in more detail and by way of non-limiting examples with reference to the accompanying drawings, wherein
Fig. 1 schematically depicts a first embodiment of the present invention;
Fig. 2 schematically depicts a further embodiment of the present invention;
Fig. 3 schematically depicts a method of applying a coating comprising a gustative or olfactory deterrent to a battery in accordance with an embodiment of the present invention; and
Fig. 4 schematically depicts a method of applying a coating comprising a gustative or olfactory deterrent to a battery in accordance with another embodiment of the present invention.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

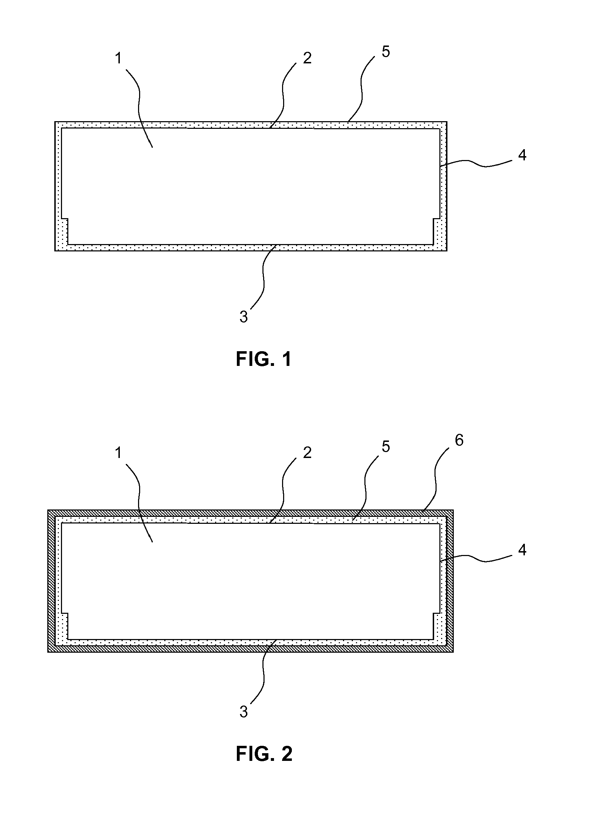

Fig. 1 shows a first embodiment of the present invention, in which a battery 1, such as a button cell battery, has been coated with a biocompatible coating 5 comprising an olfactory or gustative deterrent compound. In the context of the present invention, the term biocompatible coating is used to indicate that both the coating material and the deterrent are non-toxic to the individual, e.g. are used in quantities that are harmless to the individual.

In Fig. 1, all external surfaces, i.e. top surface 2, bottom surface 3 and side surface 4, of the battery 1 carry the coating 5 by way of non-limiting example only. It is for instance equally feasible to only coat the side surface 4, which has the advantage that the contact resistance of the contact terminals of the battery 1, which are typically formed by the top surface 2 and the bottom surface 3, remains unaffected. Alternatively, only the top surface 2 and/or the bottom surface 3 may be coated. This relaxes the requirements in terms of electrical conductivity (or electrical resistivity) of the coating 5; for instance, in case of an electrically conductive coating 5 the coating of selected surfaces only prevents the formation of a short-circuit between the terminals of the battery 1. In other words, when using an electrically conductive coating 5, this coating should not form a conductive path between the terminals of the battery 1.

It may however be easier from a manufacturing perspective to cover all outer surfaces of the battery 1 with the coating 5. This is particularly relevant for electrically insulating coatings as these do not form a path having sufficient conductivity to short circuit the battery terminals. In this case, care has to be taken that the coating 5 does not negatively affect the performance of the battery 1. This may for instance be achieved by keeping the coating 5 thin enough to prevent a significant increase that the contact resistance of the battery terminals, i.e. an increase beyond acceptable tolerances.

In case of an electrically conductive coating 5, several feasible embodiments may be contemplated. For instance, a conductive gel may be used or if a more mechanically robust coating is desired, a conductive polymer matrix may be considered. In order to comply with health and safety requirements, such a polymer matrix preferably is made of a biocompatible polymer. Non-limiting examples of conductive polymer matrices made of biocompatible polymers include polypyrrole, polyoxometalate and polythiophene-based matrices. It should be understood that the exact polymer structure is not particularly relevant, i.e. the different types of monomer units may be used to build the polymers, e.g. unsubstituted monomers or monomers substituted with (combinations of) one or more unbranched or branched alkyl groups, halide groups, hydroxyl groups, amine groups, amide groups and so on as long as the resulting polymer matrix is biocompatible.

The gustative or olfactory deterrent may be enclosed, i.e. trapped inside, in the polymer matrix in any suitable manner. For instance, the polymer matrix may be formed from a composition also including the gustative or olfactory deterrent, in which case the gustative or olfactory deterrent is enclosed upon formation of the polymer matrix. Alternatively, the battery 1 including the polymer matrix coating 5 may be submerged in a solution comprising the gustative or olfactory deterrent such that the polymer matrix absorbs the gustative or olfactory deterrent.

It is of course not essential that the polymer matrix is made of an electrically conductive polymer. In case of an electrically insulating polymer matrix forming the coating 5, this coating should be kept thin enough to not detrimentally affect the performance of the battery 1 as previously explained.

Preferably, the gustative or olfactory deterrent is released from the coating 5 upon the coating 5 being brought into contact with a bodily fluid, in particular saliva or sweat. This effect may for instance be achieved if the water in the bodily fluid dissolves (i.e. releases) the gustative or olfactory deterrent from the polymer matrix, thereby initiating or enhancing its deterring effect.

A further embodiment of the coating 5 that has been contemplated by the present inventors is an oil-based coating 5. Such coatings have the advantage that a thin layer may be formed over the surface 2, 3 and/or 4 of the battery 1 with the dual purpose of protecting the battery 1 from corrosion.

In an embodiment, capsaicin as a deterrent is dissolved in an organic solvent, e.g. ethyl acetate or alcohols such as ethanol, or a suitable oil, e.g. a consumable plant oil such as olive oil in a concentration of at least 0.02 parts per million (ppm). The concentration of the capsaicin may for instance be chosen in the range of 0.02 - 20,000 ppm. As the typical volume of oil covering the battery 1 is around 1 microliter, this equates to 1 picogram - 1 microgram of capsaicin per battery. Considering that the LD50 value of capsaicin is 0.5 gram per kilogram of infant bodyweight, it will be clear that the amount of capsaicin included in the oil is well within safety limits. Higher concentrations of the capsaicin may be used as long as the LD50 safety limits are not exceeded. Preferably, the amount of any such deterrent should be no more than 1% of its LD50 value.

Capsaicin is an extremely pungent compound. However, the present invention is not limited to capsaicin as pungent deterrent. Alternatively, capsaicin-containing oils, oils from (red or black) peppers, piperine, piperine-containing oils and synthetic compouds such as pelargonic acid derivatives such as pelargonic acid morpholide may be used instead. Other example compounds will be apparent to the skilled person.

Alternatively, unpleasant tasting compounds, e.g. extremely bitter compounds may be used as gustative deterrent. For instance, sucrose octa-acetate may be used in a suitable oil such as a plant oil in a concentration of at least 10 ppm. The LD50 value of sucrose octa-acetate is 45 g per 1 kg infant bodyweight such that the upper limit of the sucrose octa-acetate concentration may be derived from its LD50 value as previously explained.

Alternative gustative deterrents include quinine, benzoic benzyl amine amide and denatonium compounds such as denatonium benzoate or denatonium salts as for instance marketed under the trade name Bitrex. Other example compounds will be apparent to the skilled person.

The coating 5 does not need to be oil-based. It is also feasible to use solvent-based, e.g. water-based coatings in case the olfactory or gustative deterrent is water-soluble but not oil-soluble. Non-limiting examples of such a compound include denatonium saccharide salts. Quinine is another bitter compound that is particularly water-soluble.

Upon insertion of the battery 1 comprising such an oil-based or solvent-based coating 5 the coating including the deterrent will quickly dissolve in the saliva of the infant, thus exposing the taste buds and/or nose of the infant to the olfactory or gustative deterrent, which will trigger the infant to expel the battery from its mouth, e.g. by spitting it out.

The oil-based or solvent-based coating 5 may be applied to the battery 1 in any suitable manner. For instance, the coating 5 may be sprayed or ink-jetted onto the battery 1. Alternatively, the coating 5 may be sponged onto the battery 1 or the battery 1 may be submerged in the coating 5. Other suitable alternatives will be apparent to the skilled person. After application of the coating 5, subsequent processing steps may be contemplated. For instance, an optional drying step may be applied to remove at least some of the oil or solvent. Subsequent processing steps may also involve curing steps in case the coating 5 is a polymer matrix. As such steps are entirely routine to the skilled person they will not be explained in further detail for the sake of brevity only.

In order to limit the exposure of a handler of the battery 1 to the olfactory or gustative deterrent during intended handling of the battery 1, e.g. when unpacking it and inserting or removing it from an appliance, the coating 5 comprising the deterrent may be covered by an additional film or coating 6 as shown in Fig. 2. The additional coating 6 should be biocompatible, i.e. non-toxic, and highly water-soluble, or at least highly soluble in bodily fluids, most relevantly saliva, such that the coating 6 will rapidly dissolve to facilitate the release of the olfactory or gustative deterrent before the infant can swallow the battery 1.

Any suitable embodiment of the protective coating 6 may be contemplated. In case of an electrically insulating coating 6, the combined thickness of the coating 5 comprising the deterrent and the protective coating 6 should be such that the electrical performance of the battery 1 is not adversely affected as previously explained. The biocompatible protective coating 6 instead may be electrically conducting. Non-limiting examples of suitable electrically conductive coatings include poly-(2-acrylamido-2-methylpropenesulfonic acid) and polyaniline-poly(2-acrylamido-2-methylpropane sulfonic acid) although other examples will be apparent to the skilled person.

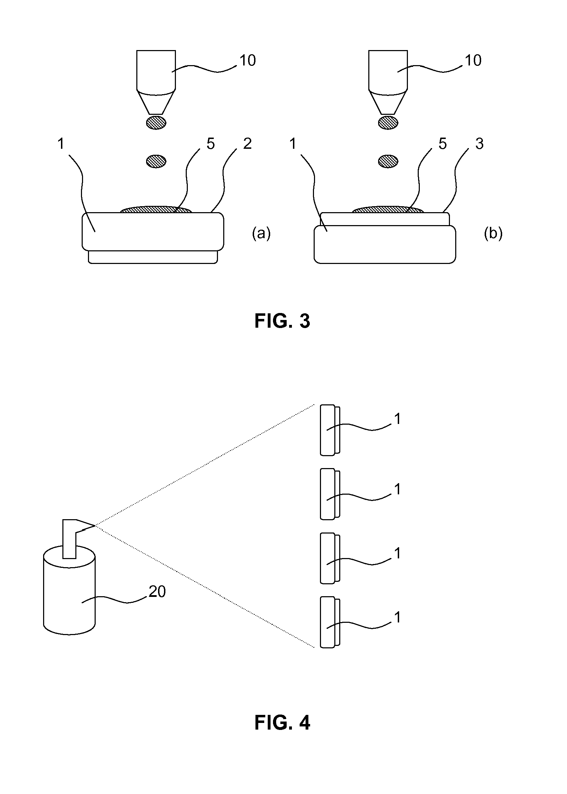

Fig. 3 depicts an example embodiment of a method of applying a coating 5 comprising a gustative or olfactory deterrent to a battery 1 such as a button cell battery. In a first step (a), a solution of the coating 5 is applied to the top surface 2 of the button cell battery 1 using an inkjet printing head 10. This has the advantage that the amount of coating 5 applied to the chosen surface of the battery 1 can be precisely controlled. In step (b), the coating process is repeated on the bottom surface 3 of the button cell battery 1. It is pointed out that it is not necessary to apply both steps (a) and (b); in alternative embodiments of the present invention one of the steps (a) and (b) may be omitted. It is further pointed out that other printing techniques, e.g. screen printing or offset printing may be used instead of inkjet printing.

Fig. 4 depicts another example embodiment of a method of applying a coating 5 comprising a gustative or olfactory deterrent to a battery 1 such as a button cell battery. In this embodiment, a spraying device 20 is used to simultaneously apply a spray such as pepper spray to the respective exposed surfaces of a plurality of batteries 1. The thus applied coating may for instance contain a capsaicin such as oleoresin capsicum. The advantage of this embodiment is that the coating 5 can be applied more quickly compared to the aforementioned printing method at the expense of reduced accuracy in terms of the amount of deterrent applied.

With respect to the amount of deterrent in the coating 5 of a battery 1, the following is noted. The concentration of the olfactory or gustative deterrent should be high enough to ensure that the battery 1 will be spit out upon insertion into the mouth for gustative deterrents or to ensure that insertion into the mouth will be prevented for olfactory deterrents.

Several types of gustative deterrents may be contemplated as previously explained. Suitable gustative deterrents may be divided into different taste groups, e.g. bitter compounds and spicy (hot) compounds.

For the bitter compounds sucrose octaacetate and denatonium benzoate, the threshold concentration of the deterrent in the coating 5 is 10 and 0.05 ppm respectively. At this concentration, 50% of all people will taste the compounds. Hence, to ensure that substantially all people will spit out a battery 1 coated with a coating 5 comprising such a compound, these threshold concentrations should be sufficiently exceeded. Sucrose octaacetate acts as denaturant for (ethyl-)alcohol at 600 ppm. Denatonium benzoate is also a denaturant in alcohol at a concentration of 20-50 ppm. This translates to at least 3 *10⁻³ gram sucrose octaacetate or 1*10⁻⁴ gram denatonium benzoate being incorporated in the coating 5.

For the spicy hot compounds capsaicin and piperine, the threshold concentrations are 0.02 and 1.35 ppm respectively. Both compounds are only soluble in organic solvents and only in minimal amount in water. Capsaicin (from red peppers) is more potent, and is therefore preferred over piperine (from black pepper). A concentration of 1 ppm capsaicin in water makes this solution distasteful. For the given amounts of saliva, this translates to at least 5*10⁻⁶ gram capsaicin being included in the coating 5. As much smaller amounts of the spicy hot compounds are required to generate a deterrent effect compared to the aforementioned bitter compounds, the spicy hot compounts are preferred over the bitter compounds.

In the case of inkjet printing method shown in Fig. 3, the average ink jet printer droplet size may be used to calculate the concentration of the gustative deterrent in the ink used to form the coating 5. Alternatively, a saturated solution of the deterrent may be used as this ensures sufficient deterrent being deposited on the battery, and has the further benefit of rapid evaporation of the solvent. In case of using the average droplet size for the calculations, an ink jet droplet may for instance measure 10-30 nanogram or 10-30 picoliter. An inkjet printer may for instance generate droplets at a droplet frequency of 6 kHz, such that 10*10⁻¹²*6*10³ = 6*10⁻⁸ liter/second can be applied onto a battery 1. To increase the amount of ink, several nozzles 10 may be used in parallel. For instance, when using sixteen nozzles 10 in parallel, it is possible to deliver 16*60*10⁻⁹= 0.96 - 1*10⁻⁶ liter/ second to one or more batteries 1.

For sucrose octaacetate, a concentration of 3*10⁻³/1*10⁻⁶ = 3000 gram/liter in the ink used to form the coating 5 may be chosen. Although this may appear as a large amount it is still within the solubility limits of sucrose octaacetate in suitable solvents such as acetone and methyl acetate.

For denatonium benzoate, a concentration of 0.1*10⁻³/1*10⁻⁶ = 100 gram/liter in the ink used to form the coating 5 may be chosen. A non-limiting example of a suitable solvent for the denatonium benzoate is ethanol.

For capsaicin a concentration of 0.005*10⁻³/1*10⁻⁶ = 5 gram/liter in the ink used to form the coating 5 may be chosen. Suitable solvents of the capsaicin include ethanol, methyl or ethyl acetate and petroleum ether.

In a preferred embodiment, the coating 5 comprises a combination of a bitter and a spicy hot gustative deterrent. A particularly preferred combination is denatonium benzoate and capsaicin as both have good solubility in ethanol. Alternatively, sucrose octaacetate and capsaicin may be combined as both compounds are soluble in methyl or ethyl acetate. It is of course not necessary to combine both deterrents into a single ink. Instead, separate inks may be applied to a chosen surface of the battery 1, with each ink comprising a different gustative deterrent.

The present invention has been described in particular reference to button cell batteries. However, it should be understood that the teachings of the present invention may be applied to any type of battery that is small enough to be ingested by an infant. In addition, the present invention is not limited to the inclusion of a single olfactory or gustative deterrent in the coating 5. Mixtures of such compounds, e.g. a mixture of capsaicin resins and/or denatonium salts may for instance be contemplated. At this stage, it is noted that the use of gustative deterrents is preferred over olfactory deterrents as this avoids the risk of the battery or a device containing the battery becoming unappealing to the user because of unwanted (slow) release of the olfactory deterrent.

The present invention will now be described in more detail with the aid of a number of examples. It should be understood that these examples are not intended to limit the scope of the present invention and that alternative examples, as for instance can be derived from the foregoing may be contemplated by the skilled person.

### EXAMPLE 1

100g denatonium benzoate and 5g capsaicin are dissolved in 11 pure ethanol to form an ink for printing onto a button cell battery. An inkjet printer, a Dimatix Materials printer with 16 nozzles, is filled with the ink and 1µl of the ink is applied on the top surface 2 of a button cell battery 1. Each button cell battery 1 is printed for Is. The ethanol is evaporated, leaving a deposit of semi crystalline-denatonium benzoate and oily capsaicin on the top surface 2 of the button cell battery 1.

### EXAMPLE 2

A top surface 2 of a battery 1 is coated with a coating 5 as in example 1, with the difference that as the ink, a solution of 3000g sucrose octaacetate and 5g capsaicin in 1L pure ethyl acetate is used. The ethyl acetate is evaporated, leaving a deposit of semicrystalline sucrose octaacetate and oily capsaicin on the top surface 2 of the button cell battery 1.

### EXAMPLE 3

100g denatonium benzoate is dissolved in 1L ethanol to form a first ink. 5g capsaicin is dissolved in 1L ethyl acetate to form a second ink. Two inkjet printers, (Dimatix Materials printers each with 16 nozzles), are filled with one of the two inks. 1µl of the ink is applied on the top surface 2 of a button cell battery 1. Each button cell battery 1 is printed for 1s with each ink. The ink solvents are subsequently evaporated, leaving a deposit of semi crystalline-denatonium benzoate and oily capsaicin on the top surface 2 of the button cell battery 1.

### EXAMPLE 4

10 g oleoresin capsicumis dissolved in 1000 gram ethanol. The concentration of capsaicin in this oleoresin must be at least 10 %, or alternatively the resin must have a hotness indicator of 16 million Scoville heat units (SHU). The solution is sprayed over a number of button cell batteries 1 such that each button battery receives at least 5 µg capsaicin.

### EXAMPLE 5

A commercial pepper spray is applied onto a chosen surface of a number of button cell batteries 1 such that the coating 5 on each button cell battery 1 comprises at least 5 µg capsaicin. Several spray runs may be applied to achieve the desired levels of capsaicin on each button cell battery 1.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. Battery (1) having an outer surface (2, 3, 4) carrying a biocompatible coating (5) comprising a gustative or olfactory deterrent.

2. The battery (1) of claim 1, wherein the gustative or olfactory deterrent is released from said coating (5) upon contact with sweat or saliva.

3. The battery (1) of claim 2, wherein the biocompatible coating (5) comprising a conductive polymer matrix enclosing the gustative or olfactory deterrent.

4. The battery (1) of claim 3, wherein the conductive polymer matrix comprises a polymer selected from the group consisting of polypyrroles, polyoxometalates and polythiophenes.

5. The battery (1) of any of claims 1-4, wherein the biocompatible coating (5) is covered by a further biocompatible water-soluble conductive layer (6).

6. The battery (1) of claim 5, wherein the further biocompatible water-soluble conductive layer (6) comprises poly-(2-acrylamido-2-methylpropenesulfonic acid) or polyaniline-poly(2-acrylamido-2-methylpropane sulfonic acid).

7. The battery (1) of claim 1, wherein the biocompatible coating (5) is a water-soluble coating.

8. The battery (1) of claim 1, wherein the biocompatible coating (5) is oil-based.

9. The battery (1) of any of the preceding claims, wherein the gustative deterrent is a composition comprising a compound selected from the group comprising quinine, benzoic benzyl amine amide, a denatonium-based compound such as denatonium benzoate and denatonium saccharide salts, sucrose octa-acetate, capsaicin, piperine and a pelargonic acid derivate such as pelargonic acid morpholide.

10. The battery (1) of any of claims 1-8, wherein the olfactory deterrent is a composition comprising a compound selected from the group comprising isovaleric acid, butyric acid, civet oil and derivatives thereof.

11. The battery (1) of any of the preceding claims, wherein the battery is a button cell battery.

12. A method of manufacturing a battery (1), comprising:
providing said battery (1); and
providing an outer surface (2, 3, 4) of said battery (1) with a biocompatible coating (5) comprising a gustative or olfactory deterrent.

13. The method of claim 12, wherein the step of providing said coating (5) comprises applying said coating by ink-jet printing.

14. The method of claim 12, wherein the coating (5) is a liquid, and the step of providing said coating comprises immersing the battery (1) in said liquid.

15. The method of claim 12, wherein the step of providing said coating (5) comprises forming a conductive polymer matrix on said outer surface (2, 3, 4) and embedding the gustative or olfactory deterrent in said coating.
